# EUROPÄISCHE PATENTSCHRIFT

(11) **EP 2 284 845 B1**
(45) Veröffentlichungstag und Bekanntmachung des Hinweises auf die Patenterteilung: **20.06.2012**
(21) Anmeldenummer: 10171950.8
(22) Anmeldetag: 05.08.2010
(51) Int. Cl.: H01F 6/06

(54) **HTSL-Stromzuleitung zur Verbindung eines supraleitenden Verbrauchersystems mit einem Stromeinspeisepunkt**
HTSL power supply for connecting a superconducting consumer system with a power feed-in point
Ligne d'alimentation HTSL destinée à la liaison d'un système utilisateur supraconducteur doté d'un point d'alimentation en courant

(30) Priorität: 10.08.2009 DE 102009028413
(43) Veröffentlichungstag der Anmeldung: 16.02.2011
(73) Patentinhaber: Bruker HTS GmbH, 63450 Hanau (DE)
(72) Erfinder: Arndt, Tabea, 91056, Erlangen (DE); Munz, Martin, 63755, Alzenau (DE); Aubele, André, 63457, Hanau (DE); Sailer, Bernd, 63755, Alzenau (DE)
(74) Vertreter: Kohler Schmid Möbus

(56) Entgegenhaltungen:
- DE-A1-102005 058 029
- JP-A- 5 218 513
- US-A- 5 742 217
- DATABASE WPI Week 200244 Thomson Scientific, London, GB; AN 2002-410148 XP002605227, & JP 2002 064014 A (FUJI ELECTRIC CO LTD) 28. Februar 2002 (2002-02-28)

## Beschreibung

Die Erfindung betrifft eine Stromzuleitung zur Verbindung eines supraleitenden Verbrauchersystems, insbesondere einer Magnetspule, mit einem Stromeinspeisepunkt, der sich auf einer höheren Temperatur als das Verbrauchersystem befindet, umfassend
- einen flachen, langgestreckten Träger und
- mehrere mechanisch und elektrisch parallele Hochtemperatursupraleiter (HTSL),
wobei die HTSL nebeneinander auf dem Träger angeordnet sind.

Gattungsgemäßer Stand der Technik ist aus der DE 10 2005 058 029 A1 bekannt.

Supraleitende Verbrauchersysteme werden überall dort eingesetzt, wo (meist starke) elektrische Ströme bei geringem elektrischen Widerstand fließen sollen. Ein wichtiges supraleitendes Verbrauchersystem stellen supraleitende Magnetspulen dar, die zur Erzeugung starker Magnetfelder etwa für NMR-Spektrometer oder MRI-Tomographen eingesetzt werden. Das supraleitende Verbrauchersystem muss dabei für den Betrieb auf einer kryogenen Temperatur gehalten werden, so dass das im Verbrauchersystem enthaltene Supraleitermaterial unterhalb seiner Sprungtemperatur Tc eingesetzt werden kann. Das supraleitende Verbrauchersystem muss dazu mit Kältemaschinen gekühlt werden; die erforderliche Kühlleistung bzw. die für die Bereitstellung der Kühlleistung erforderliche Energie stellt einen erheblichen Kostenfaktor dar.

In das supraleitende Verbrauchersystem wird bei Inbetriebnahme oder auch während des laufenden Betriebes elektrischer Strom eingespeist. Dazu werden so genannte Stromzuleitungen (auch Stromzuführungen genannt) verwendet. Stromzuleitungen sollten daher einen elektrisch gut leitfähigen Strompfad bereitstellen. Stromzuleitungen verbinden einen Stromeinspeisepunkt mit dem supraleitenden Verbrauchersystem auf der kryogenen Temperatur.

Da die Stromquellen (etwa das lokale Stromnetz) ihre Anschlüsse in der Regel auf Raumtemperatur zur Verfügung stellen, wird über die Stromzuleitung grundsätzlich ein Wärmeleitungspfad zum supraleitenden Verbraucher eingerichtet. Der zugehörige Wärmeeintrag erhöht die erforderliche Kühlleistung für den supraleitenden Verbraucher.

Üblicherweise wird bei der Stromversorgung eine stufenweise Kühlung betrieben. Das dem Stromeinspeisepunkt nahe, erste Ende der Stromzuleitung bzw. ein entsprechendes erstes Anschlussstück wird durch eine erste Kältemaschine oder eine erste Stufe einer Kältemaschine auf einer mittelkalten Temperatur (beispielsweise 50-90 K) gehalten. Das dem supraleitenden Verbraucher nahe zweite Ende der Stromzuleitung bzw. ein entsprechendes zweites Anschlussstück wird durch eine zweite Kältemaschine oder eine zweite Stufe einer Kältemaschine nahe oder auf der für den supraleitenden Verbraucher vorgesehenen Temperatur (meist 1-30 K) gehalten. Diese stufenweise Kühlung reduziert bereits die erforderliche Kühlleistung erheblich.

Die aus der DE 10 2005 058 029 A1 bekannte Stromzuleitung offenbart einen GFK-Träger umfassend zwei gleichartige Platten, zwischen denen bandförmige, zueinander parallele Hochtemperatursupraleiter (HTSL) angeordnet sind. Die HTSL verlaufen entlang der Längsrichtung des GFK-Trägers. Die Enden der HTSL sind jeweils mit Anschlussstücken elektrisch leitend verbunden. Die bandförmigen HTSL umfassen jeweils einen normalleitenden Strompfad.

Nachteilig an dieser Stromzuleitung ist die im Verhältnis zur Baugröße relativ kleine supraleitende Stromtragfähigkeit, und weiterhin sind für den Fall, dass die Supraleitung in den HTSL nicht mehr gewährleistet ist (Quench), die Notleitungseigenschaften schwach ausgeprägt.

### Aufgabe der Erfindung

Es ist die Aufgabe der vorliegenden Erfindung, eine HTSL-Stromzuleitung mit hoher Stromtragfähigkeit und geringer thermischer Leitfähigkeit bereitzustellen, die bei Ausfall der Supraleitung in den HTSL über verbesserte Notleitungseigenschaften verfügt.

### Kurze Beschreibung der Erfindung

Diese Aufgabe wird gelöst durch eine Stromzuleitung der eingangs genannten Art, die dadurch gekennzeichnet ist,
- dass der Träger aus Edelstahl gefertigt ist,
- dass jeweils mehrere HTSL auf zwei gegenüberliegenden Träger-Seiten des Trägers nebeneinander angeordnet sind und
- dass der Träger plattenförmig mit Aussparungen ausgebildet ist.

Die Erfindung schlägt eine Umgestaltung der Konstruktion von HTSL-Stromzuleitungen vor, mit der die Eigenschaften der Stromzuleitung stark verbessert werden können. Die erfindungsgemäße Stromzuleitung weist mehrere Hochtemperatur-Supraleiter (HTSL oder HTSL-Drähte) auf, deren Sprungtemperatur bei T_{c} ≥ 30K liegt. Die für den Regelbetrieb relevante supraleitende Stromtragfähigkeit wird durch die HTSL bestimmt. Der Träger dient als Auflage für die (typischerweise bandförmigen) HTSL und stellt ein mechanisches Grundgerüst zur Verfügung. Die Wärmeleitungseigenschaften werden durch den Träger mitbestimmt.

Gemäß der Erfindung ist der Träger aus Edelstahl gefertigt. Ist die Supraleitung in einem oder mehreren der HTSL nicht mehr gewährleistet (Quenchfall), hält der Träger aus Edelstahl aufgrund seiner ohmschen elektrischen Leitfähigkeit einen Strompfad elektrischer Stromtragfähigkeit aufrecht, so dass die lokale Wärmeentwicklung am Ursprungsort des Quenchs besser beherrschbar ist und so die HTSL vor Beschädigung durch Überspannung und Überhitzung geschützt werden können. Ein normalleitender Strompfad in jedem einzelnen HTSL, der im Stand der Technik die Hauptquelle der Wärmeeinbringung über die HTSL darstellt, kann im Rahmen der Erfindung wesentlich schlanker dimensioniert werden, da er im Quenchfall durch den Strompfad im Träger entlastet wird. Im Extremfall kann der normalleitende Strompfad sogar unnötig werden und entfallen.

Gleichzeitig weist Edelstahl eine (im Hinblick auf die elektrische Leitfähigkeit) relativ geringe Wärmeleitfähigkeit auf, so dass bereits hierdurch ein Wärmeeintrag in den supraleitenden Verbraucher recht gering ist. Der Wärmestrom, der über die erfindungsgemäße Stromzuleitung in das gekühlte Verbrauchersystem eingebracht wird, wird weiter durch Aussparungen im Träger minimiert. Die Aussparungen verkleinern in der Stromzuleitung an sich die verfügbaren Wärmeleitungspfade; ebenso können durch die Aussparungen Flaschenhälse im Träger für die Wärmeleitung eingerichtet werden. Die erfindungsgemäßen Maßnahmen führen zu einer Verringerung des Aufwands, der zur Kühlung eines angebundenen supraleitenden Verbrauchersystems benötigt wird. Die Aussparungen verringern zusätzlich noch das Gewicht bzw. den Materialbedarf für den Träger.

Durch die erfindungsgemäße beidseitige Nutzung des Trägers durch Anbringung von HTSL kann eine große Anzahl von HTSL in der Stromzuleitung untergebracht werden. Entsprechend groß ist die nutzbare supraleitende Stromtragfähigkeit der erfindungsgemäßen Stromzuleitung.

Durch die Erfindung wird der Träger stärker in die Funktionalität der Stromzuleitung eingebunden bzw. die sich aus dem Aufbau des Trägers ergebenden Eigenschaften werden stärker in der Konstruktion der Stromzuleitung berücksichtigt, wodurch die Eigenschaften der Stromzuleitung auf einfache Weise verbessert werden können.

Der plattenförmige Träger mit Aussparungen ist im Wesentlichen flach, langgestreckt und quaderförmig. Außenbreite, Außenhöhe und Außenlänge des plattenförmigen Trägers beschreiben den (kleinsten) einhüllenden Quader, in den der plattenförmige Träger gerade hineinpassen würde. Der in diesem Quader (d.h. der in dem durch Außenbreite, Außenhöhe und Außenlänge aufgespannten Raum) nicht von Trägermaterial eingenommene Bereich repräsentiert die Aussparungen des Trägers. Typischerweise gilt im Rahmen der Erfindung ein Verhältnis von Außenbreite zu Außenhöhe von 3:1 oder mehr, und ein Verhältnis von Außenlänge zu Außenbreite von 4:1 oder mehr.

### Bevorzugte Ausführungsform der Erfindung

Bei einer bevorzugten Ausführungsform der erfindungsgemäßen Stromzuleitung wird der durch die Außenlänge, die Außenbreite und die Außenhöhe des Trägers aufgespannte Raum zu wenigstens 40%, bevorzugt zu wenigstens 60% von Aussparungen eingenommen. Durch die Aussparungen in dieser Größenordnung und die damit einhergehende Materialverringerung wird eine Verminderung des Wärmestroms in zumindest ähnlicher Größenordnung erreicht, verglichen mit einem plattenförmigen (flachen und länglichen, quaderförmigen) Träger, der keine Aussparungen aufweist.

Bevorzugt ist auch eine Ausführungsform, bei der ein oder mehrere Abschnitte auf der Länge des Trägers vorgesehen sind, in denen die durch die Außenbreite und die Außenhöhe des Trägers aufgespannte Querschnittsfläche zu wenigstens 70%, bevorzugt zu wenigstens 85% von Aussparungen eingenommen wird. Der oder die Abschnitte, die die oben genannten Bedingungen hinsichtlich ihrer Querschnittsfläche erfüllen, nehmen bevorzugt wenigstens 10%, besonders bevorzugt wenigstens 25% der Außenlänge des Trägers ein. Gemäß dieser Ausführungsform werden ein oder mehrere "Flaschenhälse" im Träger eingerichtet, in denen die zur Wärmeleitung beitragende Querschnittsfläche (senkrecht zur Längserstreckung) lokal gegenüber der durch die Außenhöhe und die Außenbreite des Trägers aufgespannte Querschnittsfläche reduziert ist. Der oder die Flaschenhälse bestimmen bzw. begrenzen typischerweise die Wärmeleitung des Trägers, so dass der Träger im Übrigen vorrangig auf andere Erfordernisse (etwa der mechanischen Stabilität) ausgerichtet werden kann.

Ebenfalls bevorzugt ist eine Ausführungsform, bei der der Träger mäanderförmig ausgebildet ist. Die Mäanderform wird durch Aussparungen erreicht, die ausgehend von jeweils einer Hochkantseite des Trägers, quer zu dessen Längsrichtung, über die volle Höhe des Trägers, und zwischen den Hochkantseiten in Längsrichtung alternierend, ausgebildet sind. Die Aussparungen können dabei insbesondere in Richtung der gegenüberliegenden Hochkantseite über die Mitte des Trägers hinausreichen. Durch die Mäanderform ist der Wärmeleitungspfad, verglichen mit der Außenlänge des Trägers, deutlich verlängert und entsprechend der Wärmeleitungswiderstand erhöht.

Vorteilhaft ist auch eine Ausführungsform, die vorsieht, dass zumindest ein Teil der Aussparungen als Nuten in Längsrichtung des Trägers ausgebildet ist, in denen jeweils ein HTSL angeordnet ist. Die Längsnuten erleichtern die Positionierung der HTSL. Die Seitenwände der Längsnuten schützen die HTSL vor mechanischen Beschädigungen.

Besonders bevorzugt ist weiterhin eine Ausführungsform der erfindungsgemäßen Stromzuleitung, die dadurch gekennzeichnet ist, dass der Träger aus einem U-Profil, welches zu einer Hochkantseite des Trägers offen ist, gefertigt ist.

Mit anderen Worten basiert der Träger auf einem U-Profil. Ein U-Profil bietet vorteilhafterweise an den Schenkel-Seiten (Außenseiten) große Flächen, die als Auflage für die HTSL dienen können, bei gleichzeitig kleinem Querschnitt des Trägermaterials.

In einer Weiterbildung dieser Ausführungsform weisen die Außenseiten des U-Profils jeweils eine mäanderförmige Schlitzung auf. Dadurch wir der Wärmeleitungspfad gegenüber der Außenlänge des U-Profils effektiv verlängert.

Ebenfalls bevorzugt ist eine Weiterbildung der obigen Ausführungsform, die vorsieht, dass an der Basisseite des U-Profils über die Längsrichtung des Trägers verteilt Schlitze quer zur Längsrichtung vorgesehen sind. Diese Schlitze bewirken eine Verringerung des lokal vom Trägermaterial eingenommenen Querschnitts des U-Profils, wodurch wiederum der Wärmestrom entlang des U-Profils verringert wird.

Ebenfalls besonders bevorzugt ist eine Ausführungsform, bei der die Stromzuleitung zwei Anschlussstücke, insbesondere aus Cu, aufweist, die im Bereich der längsseitigen Enden des Trägers an den Träger angelötet sind. Über die Anschlussstücke wird der Strom in die HTSL geleitet; ebenso wird über die Anschlussstücke in der Regel die Stromzuleitung gekühlt. Cu als Material für die Anschlussstücke weist eine hohe elektrische Leitfähigkeit bei geringen Kosten auf. Für das Verlöten des Trägers mit den Anschlussstücken werden in der Regel silberhaltige Lote benutzt, die sich gut für die Cu-Anschlussstücke eignen. Bevorzugt werden Lote vom Typ L-Ag72 eingesetzt. Die Verbindung des Trägers mit den Anschlussstücken erfolgt beispielsweise stumpf an den Stirnseiten. Ebenso kann eine flache Ausnehmung an den Anschlussstücken vorgesehen sein, so dass sich eine näherungsweise stufenartige Kontaktfläche zum Träger ergibt. Ebenso ist eine Quernut denkbar, die in die Anschlussstücke eingefräst wird und als Gegenstück einen Vorsprung an der Außenseite des Trägers hat oder umgekehrt.

Bei einer Ausführungsform der erfindungsgemäßen Vorrichtung sind die HTSL bandförmig ausgebildet, und insbesondere flach auf der Träger-Seite angeordnet. Diese Anordnung bietet den HTSL Schutz, da eine Angriffsfläche für mögliche mechanische Belastungen gering gehalten wird. Darüber hinaus bietet dies Anordnung eine große Kontaktfläche zwischen HTSL und Träger. Alternativ sind auch HTSL vom Rundleiter-Typ einsetzbar.

Bevorzugt ist auch eine Ausführungsform, bei der die HTSL
- Bi-2212 oder Bi-2223, insbesondere jeweils vom Typ PIT (powder in tube) mit einer Ag- oder Ag/Au-Umhüllung,
- oder YBCO, insbesondere vom Typ "coated conductor",
- oder MgB₂
enthalten. Die genannten Materialien haben sich in der Praxis bewährt und können sehr gut im Rahmen der Erfindung verbaut werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand von Ausführungsbeispielen näher erläutert. Es zeigen:
- Fig.1:: eine schematische Darstellung einer erfindungsgemäßen Stromzuleitung, die mit einer Stromquelle und einem supraleitendem Verbraucher verbunden ist;
- Fig. 2a:: eine schematische Darstellung einer erfindungsgemäßen Stromzuleitung in der Draufsicht;
- Fig. 2b: eine schematische Darstellung der Stromzuleitung in Draufsicht von Fig. 2a, jedoch ohne HTSL;
- Fig. 2c:: eine schematische Längsschnittdarstellung der Stromzuleitung von Fig. 2a entlang der Schnittebene A - A gemäß Fig. 2a;
- Fig. 2d: eine schematische Querschnittdarstellung der Stromzuleitung von Fig. 2a entlang der Schnittebene B -B gemäß Fig. 2c;
- Fig. 2e: eine schematische Querschnittdarstellung der Stromzuleitung von Fig. 2a entlang der Schnittebene C -C gemäß Fig. 2c;
- Fig. 3: eine schematische Längsschnitt-Darstellung einer stumpfen Lötverbindung zwischen einem Träger und einem Anschlussstück für die Erfindung;
- Fig. 4:: eine schematische Längsschnitt-Darstellung einer gestuften Lötverbindung zwischen einem Träger und einem Anschlussstück für die Erfindung;
- Fig. 5a: eine schematische perspektivische Darstellung einer weiteren erfindungsgemäßen Stromzuleitung, mit einem mäanderförmigen Träger und Längsnuten, dargestellt ohne HTSL;
- Fig. 5b: die Stromzuleitung von Fig. 5a, dargestellt mit HTSL;
- Fig. 6: eine schematische perspektivische Darstellung eines Trägers für eine erfindungsgemäße Stromzuleitung,
- Fig. 7:: eine schematische perspektivische Darstellung eines weiteren Trägers für eine erfindungsgemäße Stromzuleitung, basierend auf einem U-Profil, mit kammartigen Außenseiten;
- Fig. 8a: eine schematische perspektivische Darstellung einer weiteren erfindungsgemäßen Stromzuleitung, basierend auf einem U-Profil mit mäanderförmiger Schlitzung in den Außenseiten, dargestellt ohne HTSL;
- Fig. 8b: die Stromzuleitung von Fig. 8b, dargestellt mit HTSL.

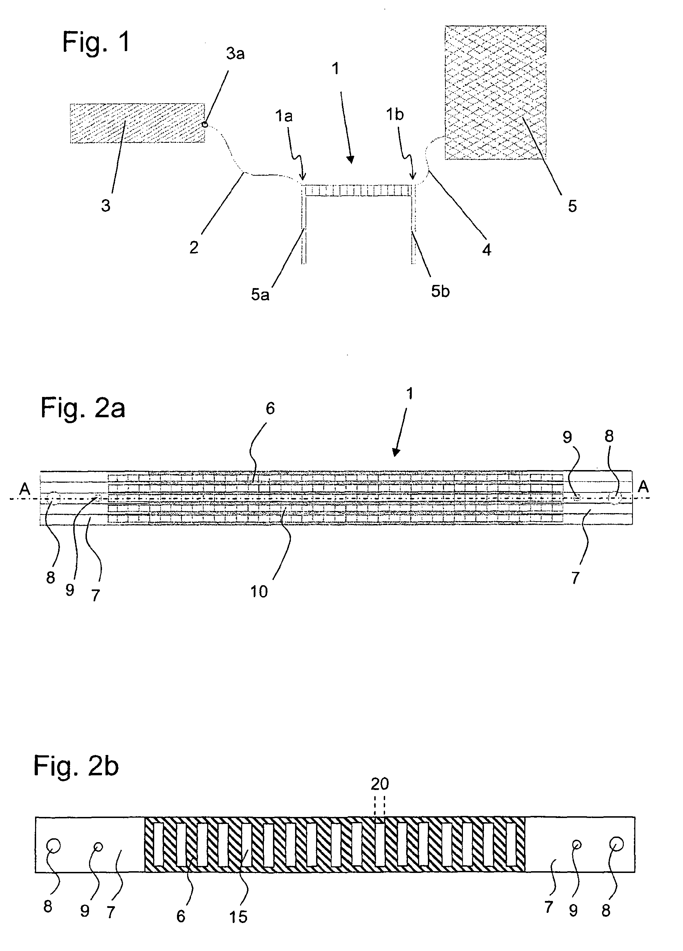

**Fig. 1** zeigt schematisch eine Anordnung, in der ein supraleitender Verbraucher 5, hier ein supraleitender Magnet, über eine erfindungsgemäße Stromzuleitung (Stromzuführung) 1 an einen Stromeinspeisepunkt 3a angeschlossen ist.

Vom Stromeinspeisungspunkt 3a, der hier auf Raumtemperatur ist und an einer Stromquelle 3 ausgebildet ist, führt eine erste Leitung 2, etwa eine Kupferleitung, zu einem ersten Ende 1a der Stromzuleitung 1; dort ist ein erstes Anschlussstück (nicht näher dargestellt) ausgebildet. Im Bereich des ersten Endes 1 a ist ein Anschluss 5a an eine erste Kältemaschine (nicht dargestellt) vorgesehen, der das erste Ende 1 a auf eine mittelkalte Temperatur T1 von ca. 50-90 K (max. 35 K für MgB₂ im HTSL) abkühlt. Die Temperatur T1 sollte unter der Sprungtemperatur der HTSL in der Stromzuleitung 1 liegen.

An einem zweiten Ende 1 b der Stromzuleitung 1 ist ein Anschluss 5b zu einer zweiten Kältemaschine (nicht dargestellt), die das zweite Ende 1 b auf eine kryogene Temperatur T2 von ca. 1-30 K abkühlt; die Temperatur T2 sollte zumindest näherungsweise so kalt sein wie die Betriebstemperatur des supraleitenden Verbrauchers 5. Anstelle der ersten und zweiten Kältemaschine kann auch eine Kältemaschine mit einer ersten und einer zweiten Kühlstufe treten (nicht dargestellt).

Ein am zweiten Ende 1 b ausgebildetes Anschlussstück (nicht dargestellt) ist mit einer zweiten Leitung, etwa einer HTSL-Leitung oder Tieftemperatursupraleiter-Leitung, mit dem supraleitenden Verbraucher 5 verbunden.

Die Figuren 2a bis 2e illustrieren eine erste Ausführungsform einer erfindungsgemäßen Stromzuleitung (Stromzuführung) 1.

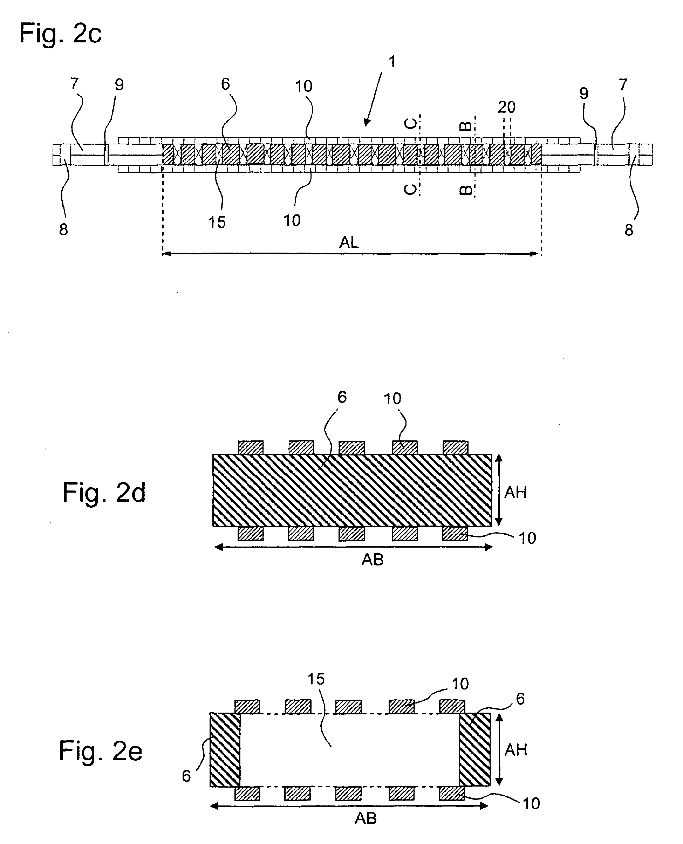

Wie aus der Aufsicht **Fig. 2a** und aus dem Längsschnitt **Fig. 2c** (vgl. Schnittebene A-A in Fig. 2a) ersichtlich, umfasst die Stromzuleitung 1 einen Träger 6 aus Edelstahl ("Flachstahlsupport"), insbesondere gefertigt aus Stahl DIN 1.4306, DIN 1.4404, DIN 1.4571, DIN 1.4435, AISI 316L, AISI 304L oder AISI 316LN, der an seinen längsseitigen Enden mit Anschlussstücken 7 verlötet ist. Die Anschlussstücke 7 weisen Bohrungen 8 zur Befestigung von Stromkontakten und Spannungspotentialabgriffe 9 auf.

An der Oberseite und der Unterseite des Trägers 6 sind jeweils mehrere (hier jeweils fünf) Hochtemperatursupraleiter (HTSL) 10 angeordnet, die mittels einer Lötverbindung sowohl mit dem Träger 6 als auch mit den Anschlussstücken 7 verbunden sind. Als Lot wird bevorzugt ein SnAg4-Lot verwendet. Es können aber auch Lote mit einem Schmelzpunkt < 200°C verwendet werden (beispielsweise Lote der Firma Fusion GmbH, Typ Solderpaste SSX 430-830).

Der Träger 6 dient als Auflage für die HTSL 10 und nimmt mechanischen Belastungen, die auf die Stromzuleitung 1 wirken, auf. Es ist zu beachten, dass der Träger 6 und die HTSL 10 ähnliche Wärmeausdehnungseigenschaften aufweisen sollten, da sonst aufgrund von unterschiedlichen Längenänderungen bei Temperaturschwankungen, insbesondere beim Einkühlen der Stromzuführung, Beschädigungen auftreten können.

Wie in **Fig. 2b** ersichtlich, die die Draufsicht von Fig. 2a bei weggelassenen HTSL illustriert, und auch aus Fig. 2c ersichtlich, weist der Träger 6 eine Vielzahl von Aussparungen 15 auf, welche senkrecht zur Längsrichtung (die Längsrichtung verläuft in den Figuren 2a, 2b und 2c von links nach rechts) des Trägers 6 verlaufen. In der gezeigten Ausführungsform sind insgesamt siebzehn Aussparungen 15 über die Außenlänge AL des Trägers 6 verteilt.

Die **Fig. 2e** zeigt einen Querschnitt durch die Stromzuleitung 1 auf Höhe einer Aussparung 15 (vgl. Schnittebene C-C in Fig. 2c). Die Außenkonturen des Trägers 6 spannen mit einer Außenhöhe AH und einer Außenbreite AB eine Querschnittsfläche auf, die von Trägermaterial nur an seitlichen Stegen eingenommen wird; ca. 80% der aufgespannten Querschnittsfläche wird von der Aussparung 15 eingenommen. In einem zugehörigen Abschnitt 20 entlang der Längsrichtung des Trägers 6, also über die Längenerstreckung einer jeweiligen Ausnehmung 15 (vgl. Fig. 2b und 2c) ist daher die Wärmeleitung stark eingeschränkt, denn sie kann nur über die "Flaschenhälse" der beiden Stege erfolgen. Die Aussparungen 15 sind in Höhenrichtung durchgehend. Die meisten HTSL 10 überspannen die Aussparung 15 vollständig, die randständigen HTS liegen hier teilweise auf den Stegen auf.

**Fig. 2d** zeigt einen Querschnitt durch die Stromzuleitung 1 zwischen zwei Aussparungen (vgl. Schnittebene B-B in Fig. 2c). In diesem Bereich ist die gesamte, durch die Außenhöhe AH und die Außenbreite AB aufgespannte Querschnittsfläche von Trägermaterial eingenommen. In diesem Bereich liegen die HTSL 10 auf dem Träger 6 unmittelbar auf und sind in dieser Ausführungsform auch auf der Oberfläche des Trägers 6 festgelötet.

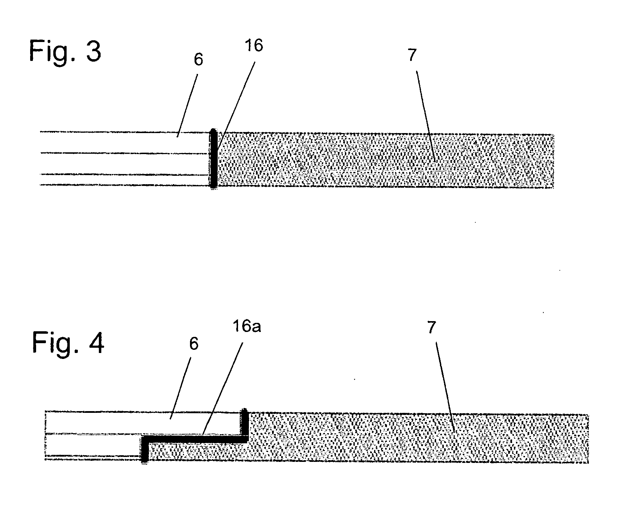

Die **Fig. 3** illustriert in einer Längsschnittdarstellung eine erste Möglichkeit zur Anbringung eines Anschlussstücks 7 an einen Träger 6 im Rahmen der Erfindung. Der Träger 6 und das Anschlussstück 7 sind mit ihren Stirnseiten (stumpfen Enden) aneinander gelötet.

Die Lötverbindung 16 wird (unabhängig von der Gestalt der Lötverbindung) bevorzugt mit silberhaltigen Loten, insbesondere vom Lot Typ L-Ag72, realisiert. Das Anschlussstück 7 ist (unabhängig von der Gestalt der Lötverbindung) bevorzugt aus Ag, Cu oder Au, oder aus Legierungen der genannten Materialien gefertigt; wahlweise kann ein Anschlussstück 8 mit einem der Materialien Ni, Ag oder Au beschichtet sein.

Eine alternative Anbringung eines Anschlussstücks 7 zeigt **Fig. 4**. Der Träger 6 und das Anschlussstück 7 bilden hier jeweils im Längsschnitt näherungsweise L-förmige Kanten aus, so dass eine annähernd S-förmige (stufenartige) Kontaktfläche zwischen beiden Bauteilen eingerichtet ist. Die Lötverbindung 16a erstreckt sich über die gesamte S-förmige Kontaktfläche und ist merklich größer als die Kontaktfläche im Falle einer lediglich stirnseitigen Kontaktierung.

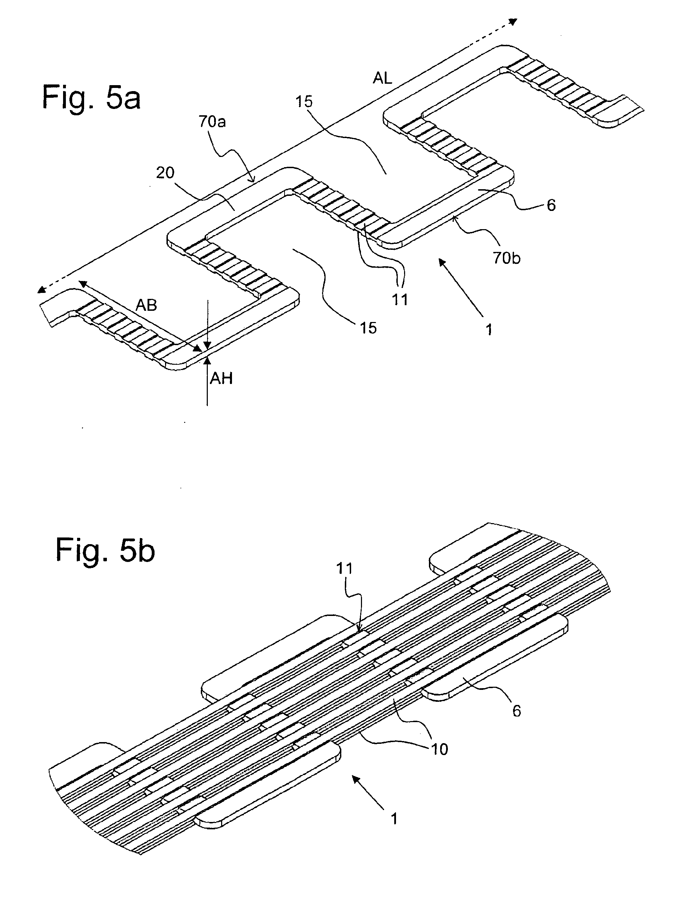

Eine zweite Ausführungsform der erfindungsgemäßen Stromzuleitung 1 ist in einer schematischen perspektivischen Ansicht in **Fig. 5a** (ohne HTSL) und **Fig. 5b** (mit HTSL) dargestellt.

Der Träger 6 der Stromzuleitung 1 weist eine mäanderförmige Struktur auf. Alternierende Aussparungen 15 ragen jeweils von den beiden gegenüberliegenden Hochkantseiten 70a, 70b in den durch die Außenlänge AL, die Außenhöhe AH und die Außenbreite AB des Trägers 6 aufgespannten Raum hinein. Die Aussparungen 15 erstrecken sich dabei über die gesamte Außenhöhe AH (d.h. die Aussparungen sind in Fig. 5a in vertikaler Richtung durchgehend). Damit verläuft der Träger 6 abschnittweise parallel zur Längserstreckung (vgl. Abschnitt 20) und abschnittweise quer zur Längserstreckung des Trägers 6; der Träger 6 verläuft sozusagen in einem geschlängelten Pfad. Bei vollständig wie hier beschriebenem mäanderförmig ausgebildeten Träger 6 ist die Länge dieses geschlängelten Pfades ca. dreimal so lang wie die Außenlänge AL des Trägers 6, was mit einem entsprechend höheren Wärmeleitungswiderstand einher geht.

In den quer zur Längserstreckung des Trägers verlaufenden Abschnitten des Trägers 6 sind weitere Aussparungen, nämlich Längsnuten 11 in der Oberseite und der Unterseite des Trägers 6 ausgebildet (z.B. durch Ausfräsen).

Wie in Fig. 5b ersichtlich, weisen die Längsnuten 11 hier eine Tiefe auf, die näherungsweise der Höhe der HTSL 10 entspricht, die auf dem Träger 6 angeordnet werden. In den Längsnuten 11 werden die HTSL 10 geführt, was die Fertigung erleichtert, und durch die Seitenwände der Längsnuten 11 werden die HTSL 10 mechanisch stabilisiert und geschützt. Gleichfalls verringern die Längsnuten 11 auch das Wärmeleitvermögen des Trägers 6 entlang des geschlängelten Pfades.

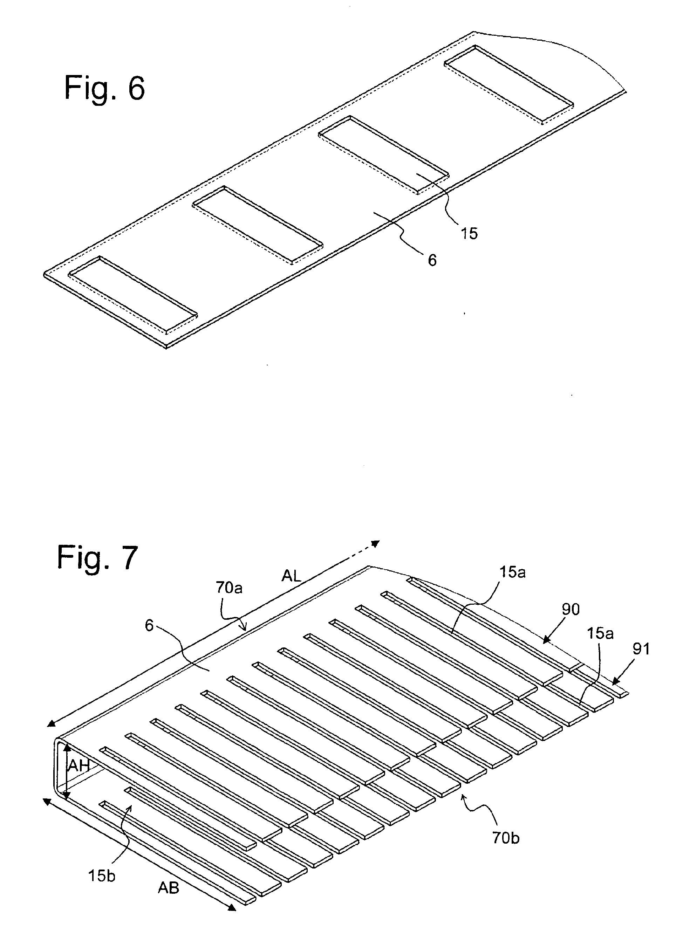

In **Fig. 6** ist in schematischer perspektivischer Ansicht ein Träger 6 für eine erfindungsgemäße Stromzuleitung dargestellt, der mit dem Träger 6 aus Fig. 2b vergleichbar ist. Der im Wesentlichen flache, langgestreckte, quaderförmige Träger 6 weist mehrere Aussparungen 15 auf, die über die Längserstreckung verteilt sind, den Träger in voller Höhe durchbrechen, und seitliche Stege (zur Gewährleistung der mechanischen Einheit) belassen.

**Fig. 7** zeigt in perspektivischer Darstellung einen weiteren Träger 6 für eine erfindungsgemäße Stromzuleitung.

Der Träger 6 basiert auf einem U-Profil, welches zu einer Hochkantseite 70a hin seine Basis aufweist, und an der gegenüberliegenden Hochkantseite 70b offen ist. Die Schenkel des U-Profils bilden die Ober- und Unterseite (Außenseiten) 90, 91 des Trägers 6 aus, auf denen die HTSL angeordnet werden (nicht dargestellt).

Die Außenseiten 90, 91 sind ausgehend von der basisabgewandten

Hochkantseite 70b mit in Querrichtung verlaufenden, schlitzartigen Aussparungen 15a versehen. Die schlitzartigen Aussparungen 15a verringern das Wärmeleitvermögen des Trägers 6 in Längsrichtung erheblich. Der offene Bereich im Inneren des U-Profils des Trägers 6 bildet die größte Aussparung 15b im von Außenbreite AB, Außenhöhe AH und Außenlänge AL aufgespannten Raum (Volumen) des Trägers 6 von Fig. 7.

Bei dem auf einem U-Profil basierenden Träger 6 ist die Erfüllung des durch die Außenbreite AB, die Außenhöhe AH und die Außenlänge AH aufgespannten Raumes mit Trägermaterial besonders gering, d.h. dieser aufgespannte Raum wird vor allem durch Aussparungen 15a, 15b eingenommen (hier zu über 90%) und entsprechend gering ist auch die Wärmeleitung.

Die Außenhöhe AH ist der Höhenbereich, in welchem (über die gesamte Längserstreckung des Trägers 6 gesehen) der Edelstahl-Träger 6 sich erstreckt. Die Außenbreite AB ist der Breitenbereich, in welchem (über die gesamte Längserstreckung des Trägers 6 gesehen) der Edelstahl-Träger 6 sich erstreckt. Die Außenlänge AL ist der Längenbereich, in welchem sich (über die gesamte Höhenerstreckung und Längserstreckung des Trägers 6 gesehen) der Edelstahl-Träger 6 sich erstreckt. Außenhöhe AH, Außenbreite AB und Außenlänge AL werden zueinander jeweils im rechten Winkel gemessen. Durch die Außenlänge AL, die Außenbreite AB und die Außenhöhe AH, angelegt an den Außenkonturen des Trägers 6, wird ein flacher, langgestreckter Quader ausgebildet ("aufgespannter Raum"), in den der Träger 6 gerade so hineinpasst.

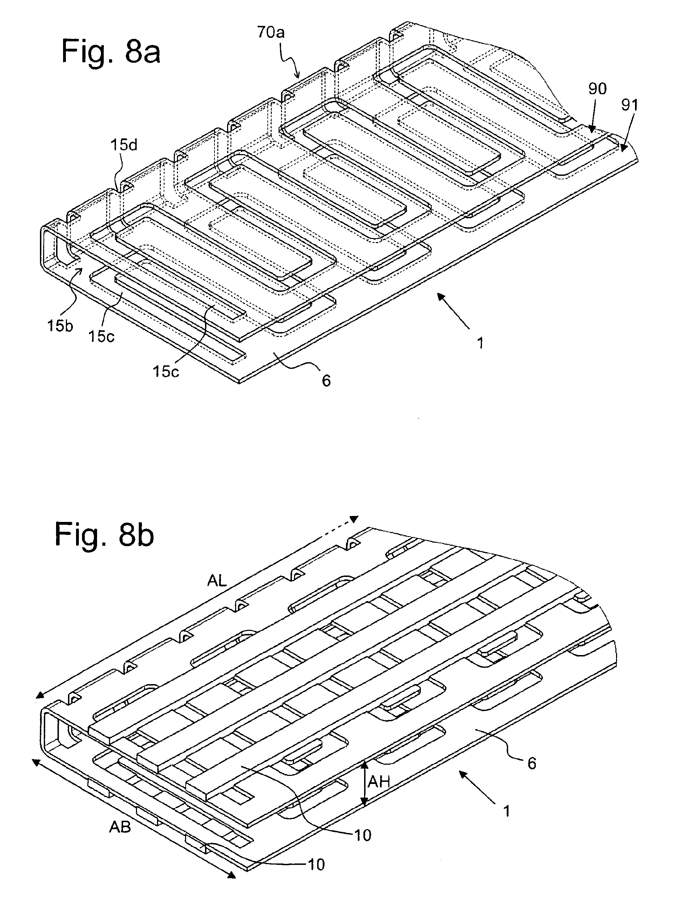

Eine weitere Ausführungsform einer erfindungsgemäßen Stromzuleitung 1 ist in **Fig. 8a** (ohne HTSL) und **Fig. 8b** (mit HTSL) dargestellt.

Die Stromzuleitung 1 weist wiederum einen auf einem U-Profil basierenden Träger 6 auf (ähnlich dem Träger in Fig. 7). Die Schenkel des U-Profils bilden die Ober- und Unterseite (Außenseiten) 90, 91 des Trägers 6, auf denen die HTSL 10 angeordnet werden.

Die Außenseiten 90, 91 weisen jeweils eine Aussparung 15c in Form einer mäanderförmigen Schlitzung auf. Dadurch wird die Wärmeleitung im Träger 6 in Längsrichtung (in Richtung der Außenlänge AL) reduziert.

Weiterhin sind in der basisseitigen Hochkantseite 70a des U-profilartigen Trägers 6 quer zur Längsrichtung verlaufende, spaltähnliche Aussparungen (Schlitze) 15d vorgesehen. Dadurch wird auch im Bereich der Basis die Wärmeleitung in Längsrichtung reduziert.

Die größte Aussparung 15b wird wiederum durch den freien Bereich im Inneren des U-Profils des Trägers 6 ausgebildet.

Man beachte, dass bei einer erfindungsgemäßen Stromzuführung zum Schutz der HTSL und zur elektrischen Isolation der HTSL-Bandleiterbereich mit Epoxyd-Harz, etwa Stycast 1266, vergossen werden kann, und/oder mit Kaptonband umwickelt werden kann.

### Bezugszeichenliste

- 1: Stromzuleitung
- 2: Leitung
- 3: Stromquelle
- 3a: Stromeinspeisepunkt
- 4: Leitung
- 5: supraleitendes Verbrauchersystem
- 5a: Anschluss für Kältemaschine
- 5b: Anschluss für Kältemaschine
- 6: Träger
- 7: Anschlussstück
- 8: Bohrung
- 9: Spannungspotentialabgriff
- 10: HTSL
- 11: Längsnut
- 15: Aussparung
- 15a-15d: Aussparung
- 16, 16a: Lötverbindung
- 20: Abschnitt
- 70a, 70b: Hochkantseite
- 90: Außenseite
- 91: Außenseite
- AB: Außenbreite
- AH: Außenhöhe
- AL: Außenlänge

## Patentansprüche

1. Stromzuleitung (1) zur Verbindung eines supraleitenden Verbrauchersystems (5), insbesondere einer Magnetspule, mit einem Stromeinspeisepunkt (3a), der sich auf einer höheren Temperatur als das Verbrauchersystem (5) befindet,
umfassend
- einen flachen, langgestreckten Träger (6) und
- mehrere mechanisch und elektrisch parallele Hochtemperatursupraleiter (=HTSL) (10),
wobei die HTSL (10) nebeneinander auf dem Träger (6) angeordnet sind,
**dadurch gekennzeichnet,**
- **dass** der Träger (6) aus Edelstahl gefertigt ist,
- **dass** jeweils mehrere HTSL (10) auf zwei gegenüberliegenden Träger-Seiten des Trägers (6) nebeneinander angeordnet sind und
- **dass** der Träger (6) plattenförmig mit Aussparungen (15; 15a-15d) ausgebildet ist.

2. Stromzuleitung (1) nach Anspruch 1, **dadurch gekennzeichnet, dass** der durch die Außenlänge (AL), die Außenbreite (AB) und die Außenhöhe (AH) des Trägers (6) aufgespannte Raum zu wenigstens 40%, bevorzugt zu wenigstens 60 % von Aussparungen (15; 15a-15d) eingenommen wird.

3. Stromzuleitung (1) nach einem der vorhergehenden Ansprüche, **dadurch gekennzeichnet, dass** ein oder mehrere Abschnitte (20) auf der Länge des Trägers (6) vorgesehen sind, in denen die durch die Außenbreite (AB) und die Außenhöhe (AH) des Trägers (6) aufgespannte Querschnittsfläche zu wenigstens 70%, bevorzugt zu wenigstens 85% von Aussparungen (15; 15a-15d) eingenommen wird.

4. Stromzuleitung (1) nach einem der vorhergehenden Ansprüche, **dadurch gekennzeichnet, dass** der Träger (6) mäanderförmig ausgebildet ist.

5. Stromzuleitung (1) nach einem der vorhergehenden Ansprüche, **dadurch gekennzeichnet, dass** zumindest ein Teil der Aussparungen (15) als Nuten (11) in Längsrichtung des Trägers (6) ausgebildet ist, in denen jeweils ein HTSL (10) angeordnet ist.

6. Stromzuleitung (1) nach einem der vorhergehenden Ansprüche, **dadurch gekennzeichnet, dass** der Träger (6) aus einem U-Profil, welches zu einer Hochkantseite (70a) des Trägers (6) offen ist, gefertigt ist.

7. Stromzuleitung (1) nach Anspruch 6, **dadurch gekennzeichnet, dass** die Außenseiten (90, 91) des U-Profils jeweils eine mäanderförmige Schlitzung (15c) aufweisen.

8. Stromzuleitung (1) nach einem der Ansprüche 6 oder 7, **dadurch gekennzeichnet, dass** an der Basisseite des U-Profils über die Längsrichtung des Trägers (6) verteilt Schlitze (15d) quer zur Längsrichtung vorgesehen sind.

9. Stromzuleitung (1) nach einem der vorhergehenden Ansprüche, **dadurch gekennzeichnet, dass** die Stromzuleitung (1) zwei Anschlussstücke (7), insbesondere aus Cu, aufweist, die im Bereich der längsseitigen Enden des Trägers (6) an den Träger (6) angelötet sind.

10. Stromzuleitung (1) nach einem der vorhergehenden Ansprüche, **dadurch gekennzeichnet, dass** die HTSL (10) bandförmig ausgebildet sind,
und insbesondere flach auf der Träger-Seite angeordnet sind.

11. Stromzuleitung (1) nach einem der vorhergehenden Ansprüche, **dadurch gekennzeichnet, dass** die HTSL (10)
- Bi-2212 oder Bi-2223, insbesondere jeweils vom Typ PIT mit einer Ag-oder Ag/Au-Umhüllung,
- oder YBCO, insbesondere vom Typ "coated conductor",
- oder MgB₂
enthalten.

## Claims

1. Current lead (1) for connecting a superconducting load system (5), in particular a magnet coil, to a current feed point (3a) that is at a higher temperature than the load system (5),
comprising
- a flat, elongated carrier (6) and
- a plurality of mechanically and electrically parallel high-temperature
superconductors (=HTSC) (10),
wherein the HTSCs (10) are disposed side by side on the carrier (6),
**characterized in that**,
- the carrier (6) is made of stainless steel,
- a plurality of HTSCs (10) are each disposed side by side on two opposite carrier sides of the carrier (6) and
- the carrier (6) is constituted in the shape of a plate with cut-outs (15; 15a-15d).

2. Current lead (1) according to the claim 1, **characterized in that** at least 40%, preferably at least 60% of the space defined by the outer length (AL), the outer width (AB), and the outer height (AH) of the carrier (6) is occupied by cut-outs (15; 15a-15d).

3. Current lead (1) according to any one of the previous claims, **characterized in that** one or more sections (20) are provided along the length of the carrier (6), in which at least 70%, preferably at least 85% of the cross-sectional area defined by the outer width (AB) and outer height (AH) of the carrier (6) is occupied by cut-outs (15; 15a-15d).

4. Current lead (1) according to any one of the previous claims, **characterized in that** the carrier (6) is constituted in the shape of a meander.

5. Current lead (1) according to any one of the previous claims, **characterized in that** at least some of the cut-outs (15) are constituted as grooves (11) in the longitudinal direction of the carrier (6) in each of which one HTSC (10) is disposed.

6. Current lead (1) according to any one of the previous claims, **characterized in that** the carrier (6) is made of a U-section that is open at an upright side (70a) of the carrier (6).

7. Current lead (1) according to the claim 6, **characterized in that** the outer sides (90, 91) of the U-section each have a meander-shaped slot (15c).

8. Current lead (1) according to either one of the claims 6 or 7, **characterized in that**, on the base side of the U-section, slots (15d) distributed over the longitudinal direction of the carrier (6) are provided that are transverse with respect to the longitudinal direction.

9. Current lead (1) according to any one of the previous claims, **characterized in that** the current lead (1) has two connection elements (7), in particular made of copper, that are soldered to the carrier (6) in the region of the longitudinal ends of the carrier (6).

10. Current lead (1) according to any one of the previous claims, **characterized in that** the HTSCs (10) are constituted in the shape of tapes and are in particular flatly arranged on the carrier side.

11. Current lead (1) according to any one of the previous claims, **characterized in that** the HTSCs (10) contain
- Bi-2212 or Bi-2223, in particular, in either case, of type PIT (powder in tube) with an Ag or Ag/Au coating,
- or YBCO, in particular, of type "coated conductor",
- or MgB₂.

## Revendications

1. Ligne d'alimentation (1) pour relier un système utilisateur supraconducteur (5), en particulier un solénoïde, à un point d'alimentation en courant (3a) qui se trouve à une température plus élevée que le système utilisateur (5),
comprenant
- un support (6) plat allongé et
- plusieurs supraconducteurs à haute température (= HTSL) (10) parallèles mécaniquement et électriquement,
les HTSL (10) étant disposés les uns à côté des autres sur le support (6),
**caractérisée en ce**
- **que** le support (6) est en acier inoxydable,
- **que** chaque fois plusieurs HTSL (10) sont disposés les uns à côté des autres sur deux côtés de support opposés du support (6) et
- **que** le support (6) est réalisé en forme de plaque avec des évidements (15 ; 15a-15d).

2. Ligne d'alimentation (1) selon la revendication 1, **caractérisée en ce que** le volume défini par la longueur extérieure (AL), la largueur extérieure (AB) et la hauteur extérieure (AH) du support (6) est occupé à au moins 40 %, de préférence à au moins 60 % par les évidements (15 ; 15a-15d).

3. Ligne d'alimentation (1) selon une des revendications précédentes, **caractérisée en ce qu'**une ou plusieurs sections (20) sont prévues sur la longueur du support (6), dans lesquelles la surface de section transversale définie par la largueur extérieure (AB) et la hauteur extérieure (AH) du support (6) est occupée à au moins 70 %, de préférence à au moins 85 %, par les évidements (15 ; 15a-15d).

4. Ligne d'alimentation (1) selon une des revendications précédentes, **caractérisée en ce que** le support (6) est réalisé en forme de méandre.

5. Ligne d'alimentation (1) selon une des revendications précédentes, **caractérisée en ce qu'**au moins une partie des évidements (15) est réalisée sous la forme de gorges (11) en direction longitudinale du support (6), dans chacune desquelles est disposé un HTSL (10).

6. Ligne d'alimentation (1) selon une des revendications précédentes, **caractérisée en ce que** le support (6) est réalisé à partir d'un profilé en U qui est ouvert vers un côté chant (70a) du support (6).

7. Ligne d'alimentation (1) selon la revendication 6, **caractérisée en ce que** les côtés extérieurs (90, 91) du profilé en U présentent chacun une perforation (15c) en forme de méandre.

8. Ligne d'alimentation (1) selon une des revendications 6 ou 7, **caractérisée en ce que** des fentes (15d) réparties sur la direction longitudinale du support (6), transversales à la direction longitudinale, sont prévues sur le côté de base du profilé en U.

9. Ligne d'alimentation (1) selon une des revendications précédentes, **caractérisée en ce que** la ligne d'alimentation (1) présente deux pièces de connexion (7), en particulier en Cu, qui sont brasées sur le support (6) au niveau des extrémités longitudinales du support (6).

10. Ligne d'alimentation (1) selon une des revendications précédentes, **caractérisée en ce que** les HTSL (10) sont réalisés en forme de bande et en particulier disposés à plat sur le côté du support.

11. Ligne d'alimentation (1) selon une des revendications précédentes, **caractérisée en ce que** les HTSL (10) contiennent
- du Bi-2212 ou Bi-2223, en particulier chaque fois du type PIT avec une enveloppe en Ag ou Ag/Au,
- du YBCO, en particulier du type « coated conductor »,
- ou du MgB₂.
